(19) Europäisches Patentamt
European Patent Office
Office européen des brevets

(11) Publication number: 0 005 001 B1

# (12) EUROPEAN PATENT SPECIFICATION

(45) Date of publication of patent specification: 02.06.82

(51) Int. Cl.³: C 08 G 69/24

(21) Application number: 79300100.9

(22) Date of filing: 19.01.79

## (54) Polymerisation of 2-pyrrolidone with alkali metal pyrrolidonates and quaternary ammonium salts, and polymerisation products thus obtained.

(30) Priority: 24.04.78 US 899066

(43) Date of publication of application:
31.10.79 Bulletin 79/22

(45) Publication of the grant of the patent:
02.06.82 Bulletin 82/22

(84) Designated Contracting States:
BE CH DE FR GB IT LU NL SE

(56) References cited:
FR - A - 2 238 729
FR - A - 2 352 003

(73) Proprietor: Barnes, Arthur Conard
482 Trinity Pass Road
New Canaan Connecticut 06840 (US)

(73) Proprietor: Barnes, Carl Edmund
482 Trinity Pass Road
New Canaan Connecticut 06840 (US)

(72) Inventor: Barnes, Arthur Conard
482 Trinity Pass Road
New Canaan Connecticut 06840 (US)
Inventor: Barnes, Carl Edmund
482 Trinity Pass Road
New Canaan Connecticut 06840 (US)

(74) Representative: Blake, John Henry Francis
BROOKES AND MARTIN High Holborn House
52/54 High Holborn
London WC1V 6SE (GB)

EP 0 005 001 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Polymerisation of 2-pyrrolidone with alkali metal pyrrolidonates and quaternary ammonium salts, and polymerisation products thus obtained

This invention relates to the polymerization of 2-pyrrolidone and more particularly to a practical method of decreasing the time required for the formation of the polymer while still preserving a molecular weight high enough for melt spinning and white color of the product.

The formation of polymers of 2-pyrrolidone involving the use of alkaline catalysts via an anionic mechanism is disclosed in U.S. Patent 2,638,463. Subsequent patents, for example U.S. 2,809,958, further disclose the need for an activator or co-catalyst to increase the yield of polymer formed.

Suitable alkaline catalysts are the oxides, hydroxides, alcoholates, hydrides, amides, etc. of the alkali metals, as well as the alkali metals themselves which form the alkali metal salt of 2-pyrrolidone e.g.

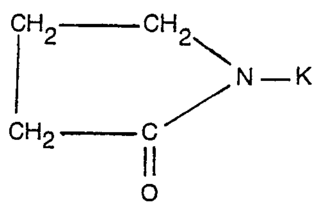

which is the actual catalyst. As used herein "alkali metal" means all the alkali metals except lithium. The simplest, and most free from side reactions, are the alkali metal hydroxides.

The polymer formed is believed to be a linear polyamide which has been called polypyrrolidone or nylon-4, having the structure:

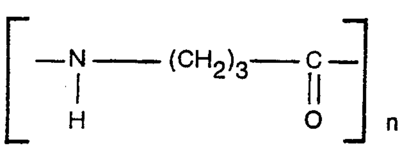

The value of n, or in other words the molecular weight of the polymer, has been found to be dependent on the type of activator employed. The vast majority of activators or cocatalysts which have been disclosed in the prior art (for example those disclosed in U.S. Patents Nos. 2,809,958; 3,060,153 and 3,069,392) result in a polymer of medium molecular weight having insufficient thermal stability to withstand the high temperatures required for melt extrusion processes, for example in the formation of textile fibers by melt spinning. It has been found that in order to be satisfactory for this purpose the polymer should have an inherent viscosity of at least 3.0 when measured as a 0.5% solution in hexafluoroisopropanol at 25°C, and a narrow molecular weight distribution indicated by a polydispersity value of 5 or under. A satisfactory test for melt extrudability is disclosed in U.S. Patent No. 3,721,652 at Column 12, Examples 5(a) and 5(b).

Of the numerous activators which have been disclosed for activating the polymerization of 2-pyrrolidone, two especially result in markedly higher molecular weights and thermal stabilities. One of these is carbon dioxide, disclosed in U.S. Patent 3,721,652 and the other is sulfur dioxide, disclosed in U.S. Patent 3,174,951. Polymers formed by using both $CO_2$ and $SO_2$ activators have been successfully melt spun into fibers (Gunter Schirawski, Die Makromolekulare Chemie, *161* (1972) page 67), but when $SO_2$ has been used as the activator the polymers formed usually have a yellow color which greatly limits their usefulness.

Typically, the polymerization of 2-pyrrolidone to form a product of sufficiently high molecular weight to be useful in melt extrusion processes requires long polymerization times. For example, U.S. Patent No. 3,721,652 recites a polymerization time of 5 days at 50°C to give a conversion of 55% (Example 6) and Gunter Schirawski (Die Makromolekulare Chemie *161* page 64 Tablė 6) reports a conversion of 52.2% at 50°C in 3 days when using an optimum $CO_2$ concentration. By optimizing all of the variables it is possible to shorten the polymerization time even further, but at least about 30 hours is required in order to obtain conversion of 50—55% when using either $CO_2$ or $SO_2$ as the activator and either sodium or potassium pyrrolidonate as the primary catalyst.

It is well known that by using a quaternary ammonium hydroxide instead of an alkali metal hydroxide, the time required for substantial yields of polymer can be greatly reduced. The first disclosure of the use of quaternary ammonium hydroxides as primary catalysts was by Ney in U.S. Patent No. 2,973,343. Shorter polymerization times were reported together with an increase in molecular weight, even when using N-acetyl pyrrolidone as the activator. In Example 9 of U.S. Patent No. 3,721,652, the use of a quaternary ammonium hydroxide catalyst together with $CO_2$ is disclosed. Polymerization times as low as 5 hours for a conversion of 50% were reported together with higher molecular weights.

There is, however, a serious problem in the use of quaternary ammonium hydroxides as catalysts. They are very unstable when heated, especially under the reduced pressure which must be used to prepare the pyrrolidone salt, breaking down into tertiary amine and alcohol or olefin. Because of this it is difficult to prepare even modest size batches for polymerization. Note that in the aforementioned Example 9 of U.S. Patent 3,721,652 only 25 ml of monomer was employed whereas in Example 4 of the same patent, 800 cc of monomer was used.

Sekiguichi et al, as disclosed in U.S. Patent No. 3,835,100, attempted to get around this problem by preparing the pure, anhydrous quaternary ammonium salts, of 2-pyrrolidone. Since these compounds are in fact the actual primary catalysts they may be added to the pyrrolidone without heating and no loss by decomposition will occur.

The difficulty with this solution to the problem is that these quaternary ammonium salts of pyrrolidone are very expensive to prepare and they must be kept "in dry state, under vacuum, and in the cold" (column 2, line 44 of U.S. Patent 3,835,100) since they are very hygroscopic and unstable to heat.

French Patent Specification No. 2,352,003 describes the use of quaternary ammonium halides and carboxylates to form the quaternary ammonium salt of 2-pyrrolidone *in situ.* Polymerization rates similar to those obtained with the quaternary ammonium salt of 2-pyrrolidone are disclosed.

In this way the problems associated with forming the quaternary ammonium salt via the thermally unstable quaternary ammonium hydroxide are also avoided since the dry quaternary ammonium halide is added to the anhydrous polymerizate directly from a dry box whereby the quaternary ammonium salt of 2-pyrrolidone is believed to be formed *in situ.* without heating.

We also tried adding anhydrous quaternary ammonium halides to the polymerizate using both $CO_2$ and $SO_2$ as activators and found them to be as effective as the quaternary ammonium salt of 2-pyrrolidone when carefully prepared, but no more so. But during the course of our investigation we tried quaternary ammonium compounds other than the halides and found, much to our surprise, that certain ones induce polymerization rates which are very much faster than those of the halides. For example the highest conversion disclosed in French Patent Specification No. 2,352,003 is 69.1% after 22 hours at 50°C. when equimolar amounts of tetramethyl ammonium chloride and carbonated potassium pyrrolidonate were employed. Without the addition of the tetramethyl ammonium chloride the conversion was 45.2%. This is a polymerization rate of about 2% per hour; the addition of the tetramethyl ammonium chloride raised this rate to about 3% per hour.

Since the polymerization rate typically slows down as higher conversions are reached, somewhat higher rates prevail earlier in the polymerization. Thus after 8 hours using the same concentrations, the above cited patent indicates a conversion of 40% when the tetramethyl ammonium chloride is added versus 16.3% when only the corresponding amount of carbonated potassium pyrrolidonate is present. The addition of the quaternary ammonium halide increased the polymerization rate from about 2% to about 5% per hour.

The fastest rate disclosed in the French Patent Specification is 6.7% per hour (Example 6a) when 10 mol percent of the carbonated potassium salt was used. This gave a conversion of 53.9% in 8 hours although after 22 hours the conversion was almost 10% lower than that obtained when 5 mol percent of the carbonated potassium salt was used (Example 5b).

In marked contrast to these rates we have found that it is possible to achieve a polymerization rate of more than 50% per hour with some of the accelerators used in this invention while still preserving molecular weight characteristics suitable for melt extrusion processes.

It should be noted that while very high polymerization rates may be obtained by using a "co-activator" system such as disclosed by Jarovitzky in U.S. Patent No. 3,681,295 and also in Examples 13 and 14 of French Patent Specification No. 2,352,003, these methods produce polymers which are not suitable for melt extrusion processes. They basically are co-activated with N-acetyl pyrrolidone or other N-acyl compound, which results in the polymer formed consisting of two different molecular species. A gel permeation chromatogram of such polymers is bilobal, exhibiting a low molecular weight peak typical of N-acyl activated polymer and a higher molecular weight peak which results from the $CO_2$ initiated polymer (U.S. Patent No. 3,721,652 Col. 6, lines 10—16 and *Chemtech,* Jan. 1972 page 17). Average molecular weights are therefore misleading. GPC curves show that polymer formed by the polymerization accelerators disclosed in this invention consists of one species only and is very narrow in molecular weight distribution (see in particular Examples 7 and 8 hereinafter, giving polydispersity values ($A_w/A_n$) of 2.11 and 2.41 respectively).

For good performance in melt extrusion processes it is this low polydispersity value which is of greatest importance. Higher molecular weights simply result in a higher melt viscosity in the extruder which, although not a problem, is not especially beneficial.

The utility of our invention lies in the capability of forming polymers of 2-pyrrolidone having characteristics suitable for melt spinning in much shorter times than hitherto achieved. This is of great importance commercially since it permits increased output from a plant without enlarging the equipment, thereby lowering the cost of production. The slower rates resulting from the use of the quaternary ammonium halides does not lower production costs enough to compensate for the cost of adding them.

In its broadest aspect the present invention provides a method of polymerizing 2-pyrrolidone comprising the steps of making the 2-pyrrolidone monomer under substantially anhydrous conditions with an alkali metal salt of 2-pyrrolidone, the alkali metal being selected

from sodium, potassium, rubidium and cesium, and a quaternary ammonium sulfate or hydrogen sulfate and then contacting the mixture with a polymerization activator.

Typically an anhydrous quaternary salt is added to an anhydrous 2-pyrrolidone solution of potassium pyrrolidonate previously prepared and polymerization initiated by adding either $CO_2$ or $SO_2$. The quaternary ammonium salts may easily be made anhydrous by dissolving them in 2-pyrrolidone and distilling over 10—20% under reduced pressure in the same manner as the anhydrous sodium or potassium pyrrolidone salt is formed. Since the quaternary ammonium salts are much more stable than the hydroxides, no decomposition occurs.

The quaternary ammonium cation may comprise four alkyl, aralkyl or aryl groups and they may be either all alike or mixed. Lower alkyl radicals with 6 or less carbon atoms are preferred since quaternaries with longer chain alkyls, being detergents, foam excessively during the washing of the polymer but they are still operative. Of the lower alkyl radicals, butyl is the most preferred. Typical radical combinations are tetramethyl, tetraethyl, tetrapropyl, tetrabutyl, benzyltrimethyl, benzyltriethyl, benzyltripropyl and benzyltributyl. The anion is a sulfate or hydrogen sulfate.

The addition of the quaternary ammonium salt has a marked accelerating effect on the polymerization but this is apparently not due to the formation of a quaternary ammonium salt of 2-pyrrolidone *in situ*. Evidence for this is the fact that potassium sulfate (which has very low solubility in 2-pyrrolidone) is not precipitated when tetramethyl ammonium sulfate is added to the anhydrous solution of potassium pyrrolidonate in 2-pyrrolidone.

Furthermore, it is not necessary to add the stoichiometric equivalent of the quaternary ammonium salt, lesser amounts are as effective or more effective in many cases.

We have further found that certain quaternary ammonium sulfates are more active than other quaternary ammonium salts such as the chlorides. It has been found that tetrabutyl ammonium hydrogen sulfate and tetrabutyl ammonium sulfate are especially effective in reducing the time to reach 50% conversion compared to the time required when using tetramethyl ammonium chloride.

When using $SO_2$ as the activator, we have found an additional unexpected and surprising effect. The quaternary ammonium compounds act as color suppressors and because of this it is possible to carry out the polymerization at 50°C without danger of color formation. For example, when using an $SO_2$ concentration of, say, 0.005 mols per mol of monomer the polymer formed at 50°C would be distinctly yellow if no quaternary ammonium compound were present, but when it is present the polymer formed at this temperature is pure white. This color inhibition occurs with all quaternary ammonium compounds including the quaternary ammonium salt of 2-pyrrolidone made via tetramethyl ammonium hydroxide.

It is not clear to us whether the marked color suppressing action is due to the presence of the quaternary ammonium ion directly or to an increase in basicity. Evidence that it may be due to increased basicity was found by substituting cesium hydroxide for the potassium hydroxide in forming the alkali metal salt of 2-pyrrolidone. Cesium hydroxide is a stronger base than potassium hydroxide. Surprisingly, although only a slight increase in the polymerization rate occurred when using cesium pyrrolidonate as the primary catalyst, the color of the polymer formed at 50°C with $SO_2$ as the activator was pure white. It is to be noted that although cesium hydroxide is expensive, it may be readily recovered and recycled.

Typically, the invention is practised by adding the quaternary ammonium salt to monomeric 2-pyrrolidone and distilling over, under vacuum, 10 to 20% of the monomer in the same manner as in the preparation of the anhydrous potassium pyrrolidonate from KOH. The anhydrous solution (or in some instances suspension) thus formed of the quaternary ammonium salt is then added to the anhydrous solution of potassium pyrrolidonate in monomer before the activator is added. The activator used is preferably either $SO_2$, $CO_2$ or in some cases $MoO_3$, since these form polymers having high molecular weight and a narrow molecular weight distribution although other activators may be used.

Polymers made in this manner using either $SO_2$ or $CO_2$ as the activator have been found to be especially well adapted for use in melt extrusion processes as, for example, in the melt spinning of fibers. High molecular weight coupled with a narrow molecular weight distribution (low polydispersity) are essential characteristics for this application.

By means of Gel Permeation Chromatography (GPC) the average weight molecular size (Aw) of a sample of polymer prepared by the addition of anhydrous tetrabutyl ammonium hydrogen sulfate to the anhydrous potassium pyrrolidonate solution followed by the addition of $SO_2$ as the activator was found to be 2.9 $\mu$m (29,000 Angstroms). The average number molecular size (An) was found to be 1.38 $\mu$m (13,800 Angstroms), giving a polydispersity ($A_w/A_n$) of 2.11.

By way of comparison, the average weight molecular size of a sample of $CO_2$ initiated polymer employing potassium pyrrolidonate as the primary catalyst is reported in U.S. Patent No. 3,721,652 (Example 3) to be 1.7802 $\mu$m (17,802 Angstroms) and the average number molecular size to be 0.7017 $\mu$m (7,107 Angstroms) thus giving a polydispersity (dispersity ratio) of 2.50. It may thus be seen that polymers of 2-pyrrolidone prepared in accordance with this invention are at least equal

if not superior to those formed by $CO_2$ initiation using only potassium pyrrolidonate as the primary catalyst. The polymerization times for the two methods are quite different however, being in the order of about 3 hours for 50% conversion when using tetrabutyl ammonium hydrogen sulfate mixed with potassium pyrrolidonate followed by $SO_2$ or $CO_2$ addition, compared to about 1 or 2 days for the $CO_2$ polymer prepared in accordance with the method set forth in U.S. Patent 3,721,652 and taken to the same conversion.

In addition to the fast polymerization rate resulting from the use of quaternary ammonium salts in the manner described there is the additional surprising discovery that, when using $SO_2$ as the activator, there is no problem with the formation of color in the resulting polymer, even at the customary polymerization temperatures of 50°C.

The amount of alkali metal hydroxide used may vary from about 0.01 to 0.15 moles per mol of 2-pyrrolidone, more preferably from about 0.01 to 0.1 mols and most preferably from about 0.03 to 0.06 mols in order to obtain optimum polymerization rates coupled with high molecular weight polymers.

The amount of quaternary ammonium salt added may range from as little as 0.01 mole per mol of alkali metal pyrrolidonate or less for purposes of preventing color formation when using $SO_2$ as the activator, to 1 mol per mol of alkali metal pyrrolidonate or more. For purposes of increasing the rate of polymerization we prefer to use about 0.15 to about 1.0 mol per mol of alkali metal pyrrolidonate, more preferably about 0.2 to 0.6. The exact amount depends upon the particular quaternary ammonium salt and also on the amount of alkali metal hydroxide added.

In the following examples the viscosity measurements were made using a 5.0% solution of the polymer in 85% formic acid. When the polymer had completely dissolved, the solution was poured into an empty Gardner Bubble Viscometer tube for comparison at 25°C. with the bubble flow of Gardner No. VG-7375 standard bubble tubes. Some of the higher viscosities required the use of the Gardner VG-7380 series of tubes. These tubes are calibrated in Stokes. The viscosity values are reported in units of $m^2.s^{-1}$ (1 Stoke = 1 × $10^{-4}$ $m^2.s^{-1}$) but for purposes of comparison with other reported viscosities they are also converted to the corresponding value for inherent viscosity when measured as a 0.5 gram per deciliter (g/dl) solution in hexafluoroisopropanol (HFIP) at 25°C.

### Reference Example

100 grams of purified 2-pyrrolidone was added to a 250 ml 3-necked flask equipped with a gas inlet tube, a thermometer for measuring pot temperature and a distillation head also having a thermometer for measuring the temperature of the vapor. The distillation head was connected to a condenser and a receiver having a vacuum connection. Water at about 30—35°C was circulated through the condenser for cooling.

3.3 grams (0.05 mol) of potassium hydroxide pellets of 85% assay was added and the system evacuated to a pressure of 10 mm of mercury. About 15 grams of pyrrolidone was distilled over to remove the water formed by the reaction of the potassium hydroxide with the pyrrolidone.

The mixture was then cooled to room temperature and 0.005 mol $SO_2$ was added as a 25% mixture in dry nitrogen. Nitrogen gas was then admitted to bring the contents to atmospheric pressure and the mixture was poured into a polyethylene polymerization bottle and tightly capped. The bottle was placed in a polymerization oven maintained at 50°C. after a period of 12 hours the bottle was squeezed and the contents found to be quite soft so it was allowed to remain in the oven for a total period of 30 hours. At the end of this time the cake, now hard, was removed and ground in a Wiley mill. After washing and drying the conversion was found to be 60% but the product was distinctly yellow in color.

### Example 1

4.0 grams (0.012 mol) of tetrabutyl ammonium hydrogen sulfate was added to 70 grams of pyrrolidone in the reaction flask equipped as described in the Reference Example. 20 grams of pyrrolidone was distilled over at 10 mm pressure to insure that the solution of the quaternary ammonium salt was anhydrous. After cooling to room temperature this solution was poured into a polyethylene bottle and tightly capped.

4.0 grams (0.06 mol) of potassium hydroxide pellets (85% assay) was added to 70 grams of purified monomer in the reaction flask and 20 grams of the monomer distilled over under vacuum to form an anhydrous solution of potassium pyrrolidonate. After cooling to room temperature, nitrogen gas was admitted to bring the contents to atmospheric pressure and then the contents of the polyethylene bottle previously prepared was added to the solution of potassium pyrrolidonate in the reaction flask thus giving 100 grams of monomer containing 0.012 mol of anhydrous tetrabutyl ammonium hydrogen sulfate and 0.06 mol of potassium pyrrolidonate (or about 0.2 mol per mol of the potassium salt).

The mixture was stirred with a magnetic stirrer and a dry gas mixture containing 25% $SO_2$ in nitrogen was bubbled in over a period of about 5 minutes at room temperature until the equivalent of 0.005 mol of $SO_2$ per mol of monomer (i.e. 0.0059 mols per 100 g.) had been added. The mixture was then poured into a

polyethylene polymerization bottle which was tightly capped and placed in an oven maintained at 50°C.

After 3 1/4 hours at 50°C a white polymer was found in 54% yield. The viscosity was found to be 1.18 × $10^{-3}m^2.s^{-1}$ (11.8 Stokes), corresponding to an inherent viscosity of 4.9 dl/g in HFIP. The sample was analyzed by Differential Thermal Analysis (DTA) and found to have a peak melting endotherm at 272°C and a peak decomposition endotherm at 325°C when using a heating rate of 10°C per minute. Thus in spite of the short polymerization time this sample is as thermally stable as samples made via $SO_2$ or $CO_2$ activation using only potassium pyrrolidonate as the primary catalyst and hence requiring very much longer polymerization times.

Example 2

Example 1 was duplicated except that 6 grams (0.018 mol) of tetrabutyl ammonium hydrogen sulfate was used instead of 4 grams. The conversion was 55% in 3 1/4 hours and the viscosity was 7.1 × $10^{-4}m^2.s^{-1}$ (7.1 Stokes), equivalent to an inherent viscosity of 4.4 in HFIP. The polymer was pure white.

Example 3

Example 2 was repeated except that 8 grams (0.12 mol) of potassium hydroxide and 0.008 mol of $SO_2$ was added. A white polymer was obtained in a conversion of 41% after 2 1/2 hours at 50°C. The viscosity was 1.65 × $10^{-4}m^2.s^{-1}$ (1.65 Stokes) corresponding to an inherent viscosity of 3.1 in HFIP.

Example 4

The method of Example 3 was followed except that 0.03 mol of $CO_2$ was added in place of the $SO_2$. After 2 1/2 hours at 50°C a conversion of 46% was obtained. The viscosity was 1.5 × $10^{-3}m^2.s^{-1}$ (15 Stokes) corresponding to an inherent viscosity of 5.1 in HFIP.

Example 5

Example 4 was repeated except that 12 g of tetrabutyl ammonium hydrogen sulfate was used. At the end of 60 minutes the conversion was 60.5% and the viscosity was 8.5 × $10^{-5}m^2.s^{-1}$ (0.85 Stokes) or an IV of 2.5 in HFIP.

By comparing Examples 1, 2, 3 and 5 it may be seen that the molecular weight (viscosity) of the polymer formed may be controlled by varying the concentrations of the quaternary ammonium compound, the potassium pyrrolidonate and the activator.

Example 6

16 grams (0.048) mol of tetrabutyl ammonium hydrogen sulfate was added to 65 ml of 2-pyrrolidone and about 3 ml was distilled over under vacuum to dry the quaternary ammonium salt. After cooling to room temperature this solution was placed in a polyethylene bottle and tightly capped.

A potassium pyrrolidonate solution was prepared by adding 4.0 grams of potassium hydroxide (85% assay) to 65 grams of pyrrolidone and distilling over 25 grams under vacuum and cooled to room temperature.

The two solutions were mixed and 0.004 mols of $SO_2$ was added (as a 25% mixture with nitrogen). The mixture was then poured into a polyethylene polymerization bottle and placed in the polymerization oven at 50°C. After 5 hours the bottle was removed and the white polymer cake ground in a Wiley mill. After washing 5 times with water and drying, the conversion was found to be 50%. The viscosity was 1.48 × $10^{-2}m^2.s^{-1}$ (148 Stokes) or about 7 IV in HFIP.

DTA showed a melting endotherm peak at 270°C and a decomposition endotherm peak at 317°C at a programmed temperature rise of 10°C per minute. By Gel Permeation Chromatography (GPC) the average weight molecular size (Aw) was found to be 2.9 μm (29,000 Angstroms) and the average number molecular size (An) was found to be 1.38 μm (13,800 Angstroms). The polydispersity value, Aw/An, is 2.11

Example 7

Tetramethyl ammonium sulfate was prepared from tetramethyl ammonium bromide plus silver sulfate and obtained as a white crystalline solid. 12 grams (0.05 mol) of this was added to 50 grams of pyrrolidone and about 20% of the monomer distilled over to remove the water. This solution was added to an equal volume of an anhydrous solution containing 10 mol % of potassium pyrrolidonate in pyrrolidone thus forming a solution containing approximately 0.05 mol of quaternary ammonium salt and 0.05 mol of potassium pyrrolidonate. To this 0.004 mols of $SO_2$ (diluted with $N_2$) per mol of monomer was added and the mixture then poured into a polymerization bottle and capped. After 4 hours at 50°C. the conversion was found to be 41%. By GPC the weight average molecular size (Aw) was found to be 2.45 μm (24,500 Angstroms) and the number average (An) 1.02 μm (10,200 Angstroms). Aw/An = 2.41 indicating a narrow molecular weight distribution.

Example 8

Tetrabutyl ammonium sulfate was prepared from tetrabutyl ammonium bromide and silver sulfate. It was obtained as a pale yellow oil which was not crystallized. 17.4 grams of the oil was added to 80 g pyrrolidone and 32 grams of the pyrrolidone was distilled off under vacuum to insure dryness. This solution was added to an equal volume of an anhydrous potassium pyrrolidonate solution prepared by adding 4.0 g (0.06 mol) of KOH to 70 g of pyrrolidone and distilling over 20 grams. This resulted in a

mixture containing about 0.03 mols of the quaternary ammonium salt to about 0.06 mols of the K-salt. To this 0.005 mols of $SO_2$ (mixed with nitrogen) per mol of monomer was added and the mixture polymerized for 3 1/4 hours at 50°C. A conversion of 49% was obtained and the viscosity of the polymer was very high, estimated to be about 1.48 × $10^{-2}m^2.s^{-1}$ (148 Stokes) or an inherent viscosity of about 7 (HFIP). A DTA measurement showed the peak melting endotherm at 272°C and the peak decomposition endotherm at 321°C at a heating rate of 10°C per minute.

Example 9

3.9 grams of 85% assay potassium hydroxide was added to 50 grams of 2-pyrrolidone and 18 grams of the pyrrolidone was distilled over under vacuum to remove the water formed. To this solution there was added a dry solution of tetrabutyl ammonium hydrogen sulfate prepared by dissolving 6 grams of the quaternary ammonium salt in 65 grams of 2-pyrrolidone and distilling over 23.5 grams under vacuum.

Then there was added a mixture of 1.5 grams of molybdenum trioxide suspended in 35 grams of 2-pyrrolidone from which 9.0 grams of the pyrrolidone had been distilled over to insure dryness. The total weight of 2-pyrrolidone in the mixture was thus 99.5 grams. It was poured into a polyethylene polymerization bottle and placed in an oven maintained at 50°C.

After 7 hours a white polymer was obtained in 45% conversion. The viscosity was 1.55 × $10^{-3}m^2.s^{-1}$ (15.5 Stokes), equivalent to IV 5.1 HFIP.

Example 10

10.0 grams (0.03 mol) of tetrabutyl ammonium bisulfate was added to 80.0 grams of purified 2-pyrrolidone and 20 grams was distilled over under vacuum to insure dryness of the quaternary ammonium salt. The dried solution was placed in a bottle and tightly capped.

5.9 grams (0.09 mol) of potassium hydroxide of 80% assay was added to 85 grams of purified 2-pyrrolidone and 20 grams of this was distilled over under vacuum to remove water formed by the reaction. The remaining clear, colorless, anhydrous solution of potassium pyrrolidonate in 2-pyrrolidone was cooled to room temperature (about 25°C) and the mixed with the solution of the tetrabutyl ammonium bisulfite and stirred vigorously under vacuum with a small amount of dry nitrogen gas bubbling through. $SO_2$ gas diluted with nitrogen was then admitted until a total amount equal to 0.005 mol of $SO_2$ per mol of 2-pyrrolidone had been added. Dry nitrogen gas was admitted to bring the pressure up to atmospheric and then the mixture was poured into a polyethylene polymerization bottle and tightly capped.

After 60 minutes at 50°C the polymer cake was removed, ground, washed several times with water and dried. The conversion was 59.6% and the viscosity was 5.5 × $10^{-4}m^2.s^{-1}$ (5.5 Stokes), equivalent to an inherent viscosity of 4.23 in HFIP.

Example 11

The procedure of Example 2 was followed except that the polymerization was carried out at 30°C for 3 1/4 hours. The viscosity of the polymer was 7.2 × $10^{-4}m^2.s^{-1}$ (7.2 Stokes) with a conversion of about 50% and the polymer was pure white.

Example 12

13.7 grams (0.024 mols) of tetrabutyl ammonium sulfate was added to 70 grams of 2-pyrrolidone and 28.5 grams of the monomer was distilled over under reduced pressure to insure dryness of the hygroscopic quaternary ammonium salt. 0.006 mols of $SO_2$ diluted with nitrogen was added to this mixture.

3.2 grams of 85% KOH (0.048 mols of 100% KOH) was added to 30 grams of pyrrolidone and 8.8 grams distilled over under vacuum to form the anhydrous solution of potassium pyrrolidonate.

The two solutions were mixed and placed in an oven at 38°C. for 3—1/2 hours. At the end of this time the polymer cake was ground and washed five times with water. After drying the conversion was 60.2% and the viscosity was greater than 6.3 × $10^{-3}m^2.s^{-1}$ (63 Stokes) (IV of 6.4 HFIP).

Example 13

The procedure of Example 12 was followed except that the polymer cake was washed five times with methanol after grinding. The combined washings (500 ml) contained unchanged pyrrolidone, potassium pyrrolidonate and the tetrabutyl ammonium sulfate. The methanol was removed by heating at 55°C. under a pressure of 50 mm.

The syrup remaining was then dried by passing it through a wiped-film evaporator at a pressure of 10 mm and a jacket temperature of 90°C with a flow of dry nitrogen gas passing through to aid in the removal of water. To the dried syrup collected, 60 grams of make-up dry pyrrolidone was added and 0.005 mol of $SO_2$ per mol of monomer was added as a 25% mixture with nitrogen.

The resulting solution was immediately poured into a polymerization bottle and placed in an oven at 38°C for 3 hours. The conversion at the end of this time was 59.4% and the viscosity of the polymer was 6.0 × $10^{-3}m^2.s^{-1}$ (60 Stokes) equivalent to an HFIP inherent viscosity of 6.3.

The process was repeated several times thus establishing the fact that both the potassium pyrrolidonate and the tetrabutyl ammonium sulfate may be recycled without loss in activity.

Example 14

The method of Example 13 was followed except that the polymer was washed with water in the usual way except that the washing was continued only to the point where the filtrate was no longer alkaline to litmus paper.

The water was removed by evaporation and after adding make-up 2-pyrrolidone to the concentrate the mixture was dried in a wiped-film evaporator. It was polymerized in the same manner using $SO_2$ as the activator.

Example 15

The method of Example 13 was followed except that instead of washing the polymer with methanol, 2-pyrrolidone was used. The washings were continued until neutral to moist litmus paper. To the combined washings make-up potassium hydroxide and tetrabutyl ammonium sulfate was added and the mixture passed through a wiped-film evaporator operating at 10 mm pressure and a wall temperature of 90°C to remove water.

The equivalent of 0.005 mol of $SO_2$ per mol of 2-pyrrolidone was then added as a 25% mixture with dry nitrogen. At the end of 7 hours in an oven maintained at 38°C. a white polymer was obtained in 58% yield. The viscosity was $2.7 \times 10^{-3} m^2.s^{-1}$ (27 Stokes) corresponding to an IV of 5.6 (HFIP).

From the foregoing it will thus be seen that the quaternary ammonium salts used in this invention which act as catalysts for accelerating the polymerization of 2-pyrrolidone can be represented by the structural formula

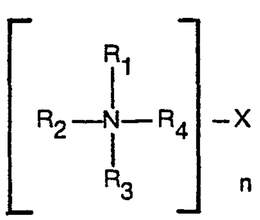

wherein $R_1$, $R_2$, $R_3$ and $R_4$ are alkyl, aralkyl or aryl radicals, n is 1 or 2 depending on the valence of X, and X is a sulfate or bisulfate (i.e. hydrogen sulfate).

Some quaternary ammonium salts of the invention are more stable than others, and the sulfates are generally more stable than the bisulfates. Some of these quaternary compounds are more effective in speeding up the polymerization than others. It has been found that those containing butyl groups are more effective than those with shorter or longer chain alkyl groups.

All of them accelerate the polymerization to some degree, however, whether $SO_2$ or $CO_2$ is used as the activator and all of them are effective in suppressing the yellow color which tends to form when $SO_2$ is used in higher concentrations and/or at higher polymerization temperatures.

The polymerization temperature may range from 20°C to 65°C with a range of from 30°C to 50°C being preferred. At temperatures above 50°C the polymerization rate decreases. At temperatures below 30°C the polymerization rate also decreases.

We have also found that the concentration of the primary catalysts (i.e. the alkali metal pyrrolidonate) is important and should preferably be between 4 and 5.5 mol per cent, more preferably from about 4.6 to about 5.2 mol per cent, based on the number of mols of 2-pyrrolidone. Substantial variation from this range reduces the rate of polymerization markedly. The concentration of the quaternary ammonium salt is also of importance. For tetrabutyl ammonium bisulfate or sulfate it should be about 2 mol per cent.

The capability of certain quaternary ammonium salts to be recycled without loss due to decomposition is important to the economics of commercial production. The primary catalyst, whether sodium, potassium or cesium hydroxide may also be readily recycled, hence the initial cost of these substances is a less important factor.

Accordingly, the invention includes within its scope the steps of washing the resultant polymer with a solvent for unchanged monomer and/or the alkali metal pyrrolidonate or the quaternary ammonium salt, removing the solvent and drying the remaining mixture, adding more substantially anhydrous 2-pyrrolidone thereto, and then contacting the resulting mixture with an activator to again polymerize the 2-pyrrolidone. The polymer may be washed with water or a lower alcohol to recover unchanged monomer and alkali metal pyrrolidonate or quaternary ammonium salt. Alternatively it may be washed with 2-pyrrolidone to recover the alkali metal pyrrolidonate and quaternary ammonium salt for further polymerization.

## Claims

1. A method of polymerizing 2-pyrrolidone comprising mixing the 2-pyrrolidone monomer under substantially anhydrous conditions with an alkali metal salt of 2-pyrrolidone, the alkali metal being selected from sodium, potassium, rubidium and cesium, and with a quaternary ammonium sulfate or hydrogen sulfate, and then contacting the mixture with a polymerization activator.

2. A method according to claim 1 wherein the quaternary ammonium salt has a cation composed of radicals independently selected from lower alkyl containing 6 or less carbon atoms and aralkyl.

3. A method according to claim 1 in which the quaternary ammonium salt has the formula:

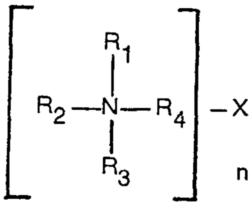

wherein $R_1$, $R_2$, $R_3$ and $R_4$ are independently selected from alkyl, aryl or aralkyl radicals, n is 1 or 2 depending on the valence of X, and X is an anion selected from sulfate and hydrogen sulfate.

4. A method according to claim 3 wherein $R_1$, $R_2$, $R_3$ and $R_4$ are independently selected from methyl, ethyl, propyl, butyl and benzyl radicals.

5. A method according to any one of claims 1 to 4 wherein the quaternary ammonium salt is tetrabutyl ammonium hydrogen sulfate or tetrabutyl ammonium sulfate.

6. A method according to any one of claims 1 to 5 wherein the activator is carbon dioxide, sulfur dioxide or molybdenum trioxide.

7. A method according to any one of claims 1 to 6 wherein the temperature of polymerization is from 20°C to 65°C.

8. A method according to any one of claims 1 to 7 wherein the concentration of alkali metal pyrrolidonate is from 4 to 5.5 mol per cent, based on the number of mols of 2-pyrrolidone.

9. A method according to any one of claims 1 to 7 in which the concentration of the alkali metal salt of 2-pyrrolidone is from about 0.01 to about 0.15 mols per mol of pyrrolidone and the concentration of quaternary ammonium salt is from about 0.01 to about 1.0 mol per mol of said alkali metal salt.

10. A method according to any one of claims 1 to 8 comprising:

(1) adding an alkali metal hydroxide to monomeric 2-pyrrolidone and removing the water formed by distillation under reduced pressure to form a substantially anhydrous solution of the alkali metal pyrrolidonate in 2-pyrrolidone, and

(2) adding to the solution the quaternary ammonium salt in substantially anhydrous form,

(3) adding to the resulting mixture the polymerization activator.

11. A method according to claim 10 wherein the substantially anhydrous quaternary ammonium salt is obtained by adding the quaternary ammonium salt to monomeric 2-pyrrolidone and distilling under vacuum to remove part of the 2-pyrrolidone and any water present.

12. A method of polymerizing 2-pyrrolidone according to any one of claims 1 to 11 further comprising the steps of washing the polymer with a solvent for unchanged monomer and/or the alkali metal pyrolidonate or the quaternary ammonium salt, removing the solvent and drying the remaining mixture, adding more substantially anhydrous 2-pyrrolidone thereto and then contacting the resulting mixture with an activator to again polymerize the 2-pyrrolidone.

13. A method according to claim 12 in which the polymer is washed with water or a lower alcohol.

14. A method according to any one of claims 1 to 11 further comprising the steps of washing the polymer with 2-pyrrolidone to remove the alkali metal pyrrolidonate and the quaternary ammonium salt, drying the washings, adding more substantially anhydrous 2-pyrrolidone thereto and then contacting the resulting mixture with an activator to again polymerize the 2-pyrrolidone.

15. Polymerized 2-pyrrolidone characterised by being substantially white in color and having a polydispersity value of not more than 5 and an inherent viscosity of at least 3.0 when measured as a 0.5 gram per deciliter solution in hexafluoroisopropanol at 25°C, and having been catalyzed under substantially anhydrous conditions with an alkali metal salt of 2-pyrrolidone, the alkali metal being selected from sodium, potassium, rubidium and cesium, and a quaternary ammonium salt having the formula

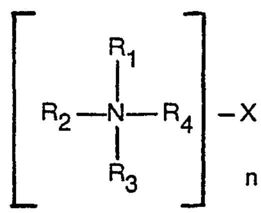

wherein $R_1$, $R_2$, $R_3$ and $R_4$ are independently selected from alkyl, aryl and aralkyl radicals, n is 1 or 2 depending on the valence of X, and X is an anion selected from sulfate and hydrogen sulfate, the 2-pyrrolidone being polymerized in the presence of sulfur dioxide as the activator, the concentration of sulfur dioxide and the temperature of polymerization being such that without said quaternary ammonium salt the resulting polymer would be substantially yellow in color.

**Revendications**

1. Procédé de polymérisation de la 2-pyrrolidone, qui comprend le mélange de la 2-pyrrolidone monomère, dans des conditions sensiblement anhydres, avec un sel de métal alcalin de 2-pyrrolidone, le métal alcalin étant choisi entre le sodium, le potassium, le rubidium et le césium, et avec un sulfate ou hydrogénosulfate d'ammonium quaternaire, puis la mise en contact du mélange avec un activateur de polymérisation.

2. Procédé suivant la revendication 1, dans lequel le sel d'ammonium quaternaire comprend un cation formé de radicaux choisis

indépendamment entre les radicaux alcoyle inférieurs renfermant 6 atomes de carbone sinon moins et les radicaux aralcoyle.

3. Procédé suivant la revendication 1, dans lequel le sel d'ammonium quaternaire est de formule:

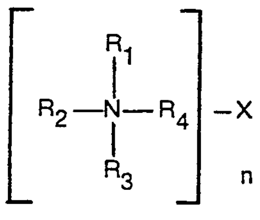

où $R_1$, $R_2$, $R_3$ et $R_4$ sont choisis indépendamment entre les radicaux alcoyle, aryle et aralcoyle, n vaut 1 ou 2 suivant la valence de X, et X est un anion choisi entre sulfate et hydrogénosulfate.

4. Procédé suivant la revendication 3, dans lequel $R_1$, $R_2$, $R_3$ et $R_4$ sont choisis indépendamment entre les radicaux méthyle, éthyle, propyle, butyle et benzyle.

5. Procédé suivant l'une quelconque des revendications 1 à 4, dans lequel le sel d'ammonium quaternaire est l'hydrogénosulfate de tétrabutyl-ammonium ou le sulfate de tétrabutylammonium.

6. Procédé suivant l'une quelconque des revendications 1 à 5, dans lequel l'activateur est le dioxyde de carbone, le dioxyde de soufre ou le trioxyde de molybdène.

7. Procédé suivant l'une quelconque des revendications 1 à 6, dans lequel la température de polymérisation est de 20°C à 65°C.

8. Procédé suivant l'une quelconque des revendications 1 à 7, dans lequel la concentration du pyrrolidonate de métal alcalin est de 4 à 5,5 moles %, sur base du nombre de moles de 2-pyrrolidone.

9. Procédé suivant l'une quelconque des revendications 1 à 7, dans lequel la concentration du sel de métal alcalin de 2-pyrrolidone est d'environ 0,01 à environ 0,15 mole par mole de pyrrolidone et la concentration du sel d'ammonium quaternaire est d'environ 0,01 à environ 1,0 mole par mole du sel de métal alcalin.

10. Procédé suivant l'une quelconque des revendications 1 à 8, qui comprend:

(1) l'addition d'un hydroxyde de métal alcalin à de la 2-pyrrolidone monomère et l'élimination de l'eau résultante par distillation sous pression réduite pour la formation d'une solution sensiblement anhydre du pyrrolidonate de métal alcalin dans la 2-pyrrolidone, et

(2) l'addition du sel d'ammonium quaternaire sous forme sensiblement anhydre à la solution,

(3) l'addition de l'activateur de polymérisation au mélange résultant.

11. Procédé suivant la revendication 10, dans lequel le sel d'ammonium quaternaire sensiblement anhydre est obtenu par addition du sel d'ammonium quaternaire à de la 2-pyrrolidone monomère et par distillation sous vide pour l'élimination d'une partie de la 2-pyrrolidone et de l'eau éventuellement présente.

12. Procédé de polymérisation de la 2-pyrrolidone suivant l'une quelconque des revendications 1 à 11, qui comprend en outre les stades de laver le polymère avec un solvant pour le monomère inchangé et/ou le pyrrolidonate de métal alcalin ou le sel d'ammonium quaternaire, d'éliminer le solvant et de sécher le mélange restant, d'y ajouter un supplément de 2-pyrrolidone sensiblement anhydre, puis de mettre le mélange résultant en contact avec un activateur pour polymériser à nouveau la 2-pyrrolidone.

13. Procédé suivant la revendication 12, dans lequel le polymère est lavé avec de l'eau ou un alcool inférieur.

14. Procédé suivant l'une quelconque des revendications 1 à 11, qui comprend en outre les stades de laver le polymère avec de la 2-pyrrolidone pour éliminer le pyrrolidonate de métal alcalin et le sel d'ammonium quaternaire, de sécher les liqueurs de lavage, d'y ajouter un supplément de 2-pyrrolidone sensiblement anhydre, puis de mettre le mélange résultant en contact avec un activateur pour polymériser à nouveau la 2-pyrrolidone.

15. 2-Pyrrolidone polymérisée caractérisée par le fait qu'elle est de couleur sensiblement blanche et a un indice de polydispersité n'excédant pas 5 et une viscosité inhérente d'au moins 3,0, mesurée sur une solution à 0,5 g par décilitre dans l'hexafluoroisopropanol à 25°C, et a été catalysée dans des conditions sensiblement anhydres au moyen d'un sel de métal alcalin de 2-pyrrolidone, le métal alcalin étant choisi entre le sodium, le potassium, le rubidium et le césium, et d'un sel d'ammonium quaternaire de formule:

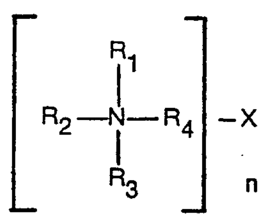

où $R_1$, $R_2$, $R_3$ et $R_4$ sont choisis indépendamment entre les radicaux alcoyle, aryle et aralcoyle, n vaut 1 ou 2 suivant la valence de X, et X est un anion choisi entre sulfate et hydrogénosulfate, la 2-pyrrolidone étant polymérisée en présence de dioxyde de soufre comme activateur, la concentration en dioxyde de soufre et la température de polymérisation étant telles qu'en l'absence de ce sel d'ammonium quaternaire, le polymère résultant serait de couleur sensiblement jaune.

## Patentansprüche

1. Verfahren zur Polymerisation von 2-Pyrrolidon, welches beinhaltet, dass man das 2-Pyrrolidonmonomer unter weitgehend wasserfreien Bedingungen mit einem Alkalisalz des 2-Pyrrolidons, wobei das Alkalimetall unter Natrium, Kalium, Rubidium und Caesium ausgewählt ist, und mit einem quartären Ammoniumsulfat oder -hydrogensulfat vermischt und das Gemisch dann mit einem Polymerisationsaktivator in Berührung bringt.

2. Verfahren nach Anspruch 1, worin das quartäre Ammoniumsalz ein Kation aufweist, das aus unabhängig voneinander unter Niederalkyl mit 6 oder weniger Kohlenstoffatomen und Aralkyl ausgewählten Resten zusammengesetzt ist.

3. Verfahren nach Anspruch 1, bei dem das quartäre Ammoniumsalz der Formel

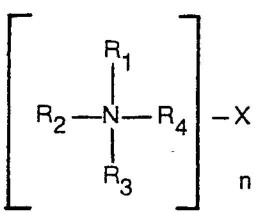

entspricht, worin $R_1$, $R_2$, $R_3$ und $R_4$ unabhängig voneinander unter Alkyl-, Aryl- und Aralkylresten ausgewählt sind, n je nach der Wertigkeit von X 1 oder 2 ist und X ein unter Sulfat und Hydrogensulfat ausgewähltes Anion darstellt.

4. Verfahren nach Anspruch 3, worin $R_1$, $R_2$, $R_3$ und $R_4$ unabhängig voneinander unter Methyl-, Aethyl-, Propyl-, Butyl- und Benzylresten ausgewählt sind.

5. Verfahren nach einem der Ansprüche 1 bis 4, worin das quartäre Ammoniumsalz Tetrabutylammoniumhydrogensulfat oder Tetrabutylammoniumsulfat ist.

6. Verfahren nach einem der Ansprüche 1 bis 5, worin der Aktivator Kohlendioxyd, Schwefeldioxyd oder Molybdäntrioxyd ist.

7. Verfahren nach einem der Ansprüche 1 bis 6, worin die Polymerisationstemperature 20°C bis 65°C beträgt.

8. Verfahren nach einem der Ansprüche 1 bis 7, worin die Konzentration des Alkalipyrrolidonats 4 bis 5,5 Molprozent, bezogen auf die Zahl Mole 2-Pyrrolidon, beträgt.

9. Verfahren nach einem der Ansprüche 1 bis 7, bei dem die Konzentration des Alkalisalzes von 2-Pyrrolidon etwa 0,01 bis etwa 0,15 Mol pro Mol Pyrrolidon und die Konzentration des quartären Ammoniumsalzes etwa 0,01 bis etwa 1,0 Mol pro Mol des besagten Alkalisalzes betragen.

10. Verfahren nach einem der Ansprüche 1 bis 8, welches beinhaltet, dass man

(1) ein Alkalihydroxyd dem monomeren 2-Pyrrolidon zusetzt und das gebildete Wasser durch Destillation bei vermindertem Druck unter Bildung einer weitgehend wasserfreien Lösung des Alkalipyrrolidonats in 2-Pyrrolidon entfernt,

(2) der Lösung das quartäre Ammoniumsalz in weitgehend wasserfreier Form zusetzt und

(3) zu dem so erhaltenen Gemisch den Polymerisationsaktivator zugibt.

11. Verfahren nach Anspruch 10, worin man das weitgehend wasserfreie quartäre Ammoniumsalz durch Zugabe des quartären Ammoniumsalzes zu monomeren 2-Pyrrolidon und Vakuumdestillation zwecks Entfernung eines Teils des 2-Pyrrolidons und alles vorhandenen Wassers erhält.

12. Verfahren zur Polymerisation von 2-Pyrrolidon nach einem der Ansprüche 1 bis 11, welches ferner die Stufen beinhaltet, dass man das Polymer mit einem Lösungsmittel für unverändertes Monomer und/oder Alkalipyrrolidonat oder quartäres Ammoniumsalz wäscht, das Lösungsmittel entfernt und das verbleibende Gemisch trocknet, weiteres weitgehend wasserfreies 2-Pyrrolidon dazugibt und dann das so erhaltene Gemisch mit einem Aktivator in Berührung bringt, um wiederum das 2-Pyrrolidon zu polymerisieren.

13. Verfahren nach Anspruch 12, bei dem das Polymer mit Wasser oder einem niederen Alkohol gewaschen wird.

14. Verfahren nach einem der Ansprüche 1 bis 11, welches ferner die Stufen beinhaltet, dass man zur Entfernung des Alkalipyrrolidonats und des quartären Ammoniumsalzes das Polymer mit 2-Pyrrolidon wäscht, die Waschflüssigkeiten trocknet, weiteres weitgehend wasserfreies 2-Pyrrolidon dazugibt und dann das so erhaltene Gemisch mit einem Aktivator in Berührung bringt, um wiederum das 2-Pyrrolidon zu polymerisieren.

15. Polymerisiertes 2-Pyrrolidon, dadurch gekennzeichnet, dass seine Farbe im wesentlichen weiss ist und es einen Polydispersitätswert nicht über 5 und eine Eigenviskosität von mindestens 3,0, wenn als Lösung von 0,5 Gramm pro Deziliter in Hexafluorisopropanol bei 25°C gemesen, aufweist und unter weitgehend wasserfreien Bedingungen mit einem Alkalisalz des 2-Pyrrolidons, wobei das Alkalimetall unter Natrium, Kalium, Rubidium und Caesium ausgewählt wird, und einem quartären Ammoniumsalz der Formel

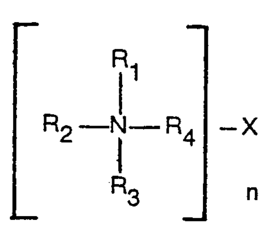

worin $R_1$, $R_2$, $R_3$ und $R_4$ unabhängig voneinander unter Alkyl-, Aryl- und Aralkylresten ausgewählt sind, n je nach der Wertigkeit von X 1 oder 2 ist und X ein unter Sulfat und Hydrogensulfat

ausgewähltes Anion darstellt, katalysiert wurde, wobei das 2-Pyrrolidon in Gegenwart von Schwefeldioxyd als Aktivator polymerisiert wird, und wobei die Schwefeldioxydkonzentration und die Polymerisationstemperatur derart sind, dass ohne das besagte quartäre Ammoniumsalz das entstandene Polymer erheblich gelb gefärbt sein würde.